# EUROPEAN PATENT SPECIFICATION

(11) **EP 3 587 067 B1**
(45) Date of publication and mention of the grant of the patent: **23.08.2023**
(21) Application number: 18758433.9
(22) Date of filing: 09.02.2018
(51) Int. Cl.: B29C 45/76, B29C 45/77, B29C 45/78

(54) **INJECTION MOLDING SYSTEM**
SPRITZGIESSSYSTEM
SYSTÈME DE MOULAGE PAR INJECTION

(30) Priority: 23.02.2017 JP 2017032702
(43) Date of publication of application: 01.01.2020
(73) Proprietor: Toyo Machinery & Metal Co., Ltd., Akashi-shi, Hyogo 674-0091 (JP)
(72) Inventor: SHIMOKUSUZONO So, Akashi-shi Hyogo 674-0091 (JP); INOUE Akira, Akashi-shi Hyogo 674-0091 (JP)
(74) Representative: Dr. Schön, Neymeyr & Partner Patentanwälte mbB
(86) International application number: PCT/JP2018/004554
(87) International publication number: WO 2018/155230

(56) References cited:
- JP-A- H08 156 060
- JP-A- 2005 161 777
- JP-A- 2006 218 870
- JP-A- 2015 123 668
- JP-A- 2017 007 207
- US-A1- 2016 236 392
- US-A1- 2016 288 392

## Description

### Technical Field

The present invention relates to an injection molding system to produce a molded article by injecting a thermoplastic resin melted in a heating cylinder.

### Background Art

Improvement in simulation technique has allowed accurate estimation of resin fluidity and the like in each step of injection molding, leading to development of approaches for optimizing molding conditions using the simulation technique.

For example, use of fluidity analysis allows recognition of the resin fluidity. The fluidity is analyzed based on information input to an injection molding machine. Phenomena under predetermined molding conditions are recognized by the fluidity analysis, thereby efficiently performing trouble solving in molding, optimization of a screw shape, and the like.

PTL 1 discloses a plasticization simulation device that calculates plasticization capacity in a screw plasticizing device based on a three-zone model where a resin material in a cylinder is in any state of the solid bed, the melt film, and the melt pool.

PTL 2 discloses an injection molding system that adjusts various conditions in injection molding by incorporating a machine learning agent as artificial intelligence for machine learning on operational conditions of injection molding.

PTL 3 discloses a technique that causes an injection molding machine itself to measure the viscosity of a resin used for injection molding to drive the injection molding machine with appropriate resin viscosity. PTL 4 discloses a molding condition diagnostic device provided in a molding machine to determine whether a molding condition setting value is appropriate or not and inform an operator of a result of the determination.

### Citation List

### Patent Literature

PTL 1: JP 2017-007207 A
PTL 2: JP 2017-030152 A
PTL 3: JP 2014-240201 A PTL 4: US 2016/0236392 A1

### Summary of Invention

### Technical Problem

In injection molding, uniform melting of the resin is important to obtain a good molded article. The molten state (state of plasticization) of the resin is determined by a plasticization condition, such as the temperature of the heating cylinder and the number of screw rotations. The plasticization condition thus has to be an optimal value for uniform melting of the resin. To obtain the optimal value of the plasticization condition, it requires however technical skills and time and also causes a loss of resin by repeating trials many times before establishing the plasticization condition.

Based on the premise that there is a problem to be solved, simulation according to injection molding is used for providing an optimal solution to the problem. That is, analysis is performed under the condition in which the problem occurred using a simulation technique to discuss a condition to solve it. Such simulation is performed strictly based on proven theories, and in reality, there are unproven phenomena. Accordingly, the plasticization condition is actually determined based on various actual measurement results in addition to fluidity analysis of the resin and thus has a problem that actually providing a good molded article greatly depends on the skill of an operator to set the plasticization condition.

The present invention has been made in view of the above problems and it is an object thereof to provide an injection molding system that assists an operator to obtain more suitable value of a plasticization condition for a resin used in an injection molding machine.

### Solution to Problem

An injection molding system according to the present invention, provided with an injection molding machine to inject a molten resin from an injection nozzle attached to an end of a heating cylinder into a die cavity by moving a screw in the heating cylinder back while rotating the screw for a step of plasticization and weighing of the molten resin, followed by a forward movement of the screw as an injection step, the system includes:
an input section to input a plasticization condition for driving the injection molding machine;
an input condition storage section to store the plasticization condition input with the input section;
an input condition simulation section to simulate a state of plasticization by the input condition input with the input section;
an ideal plasticization state storage section to store information of an ideal state of plasticization for uniform melting of the molten resin in the heating cylinder;
a comparison section to compare data stored in the input condition storage section with the information stored in the ideal plasticization state storage section based on a result of simulating the state of plasticization;
an optimal condition analysis and calculation section to analyze and calculate whether the simulation based on the input data stored in the input condition storage section is the ideal state of plasticization as a result of the comparison section using the data of the input condition storage section and the information stored in the ideal plasticization state storage section; and
an optimal condition determination section to determine an optimal plasticization condition when the simulation based on the input data is determined not to be the ideal state of plasticization.

Further the injection molding system according to the present invention includes a condition change indicating section to display information necessary to make a change to the optimal plasticization condition on a display section based on a result of calculation determined by the optimal condition determination section.

Further in the injection molding system according to the present invention, the plasticization condition input with the input section and stored in the input condition storage section is at least any one of a type of resin, a temperature of the resin, a shape of the screw, molding cycle time, and a back pressure during plasticization and weighing of the resin.

Further in the injection molding system according to the present invention, the information of the ideal state of plasticization stored in the ideal plasticization state storage section is obtained using information on uniformity of a molten state of the resin plasticized and melted in the heating cylinder.

In a preferred embodiment the injection molding system according to the present invention includes: a heating cylinder to be supplied with a thermoplastic resin; a screw provided in the heating cylinder; and a heater attached to the heating cylinder, wherein the injection molding system further comprises
a plasticization state simulation section to obtain a plasticization condition based on an input condition input to an input section and simulate a state of plasticization using the plasticization condition,
a decision section to decide whether the state of plasticization obtained by the plasticization state simulation section is an ideal state of plasticization,
a plasticization condition change section to change the plasticization condition when the decision section decides not to be the ideal state of plasticization, and
an output section to output the plasticization condition used in the plasticization state simulation section when the decision section decides to be the ideal state of plasticization, and,
when the plasticization condition is changed by the plasticization condition change section, the plasticization state simulation section simulates the state of plasticization using the plasticization condition after the change.

Further the injection molding system according to the present invention includes:
an operation control section to control a drive section for the screw and the heater to perform a purge operation using the plasticization condition used for the simulation by the plasticization state simulation section; and
a measurement section to measure at least one of weighing time and resin viscosity in the purge operation, wherein
the plasticization condition change section changes the plasticization condition using a measurement result by the measurement section.

Further in the injection molding system according to the present invention, the input condition includes information specifying the resin, information specifying the screw, an amount of resin per injection, and molding cycle time.

Further in the injection molding system according to the present invention, the plasticization condition includes number of screw rotations, a back pressure during plasticization and weighing of the resin, and a heating cylinder temperature.

### Advantageous Effects of Invention

In the present invention, the fluidity analysis mechanism is mounted in the injection molding machine in advance to allow an automatic distinction of the plasticization condition compliant with the optimal molten state (state of plasticization) of the resin by inputting information of the mounting molding machine (type of model, type of screw, etc.) and information of the intended molded article (weight of the product, type of resin, etc.).

In the present invention, the fluidity analysis mechanism is mounted in the injection molding machine in advance to allow automatic output of the plasticization condition considered to be optimal by having fixed information, such as the type of the machine, the shape of the screw, and the type of resin, in advance and to allow formulation of a more advanced and speedy molding technique.

According to the present invention, if the plasticization condition input by an operator or the like is an inappropriate plasticization condition to secure desired molding quality, an indication of changing the plasticization condition to the optimal plasticization condition is displayed on the display section. It is thus possible to readily change the plasticization condition for injection molding to an optimal condition without relying on experience and intuition of the operator or the like as in the past. In other words, it is possible to perform injection molding in the optimal plasticization condition regardless of the experience of the operator or the like, thereby allowing prevention of defects in molded articles to be produced.

### Brief Description of the Drawings

Fig. 1 is a schematic configuration diagram illustrating an injection molding machine used for an injection molding system according to a first embodiment of the present invention.
Fig. 2 is a functional block diagram of the injection molding system using the injection molding machine in Fig. 1.
Fig. 3 is a flow chart illustrating an example of operation according to the present invention executed in the injection molding system in Fig. 2.
Fig. 4 is a functional block diagram of an injection molding system according to a second embodiment of the present invention.
Fig. 5 is a flow chart illustrating an example of operation according to the present invention executed in the injection molding system in Fig. 4.

### Description of Embodiments

In an injection molding system , after an ideal plasticization condition and an analysis program are incorporated into a control program of an injection molding machine, an operator of the molding machine inputs input conditions, such as intended molded article information and molding cycle time, and selects a type of resin, a shape of a screw, and the like for automatic calculation and output of plasticization conditions to obtain an optimal molten state (state of plasticization) of the resin.

### First Embodiment

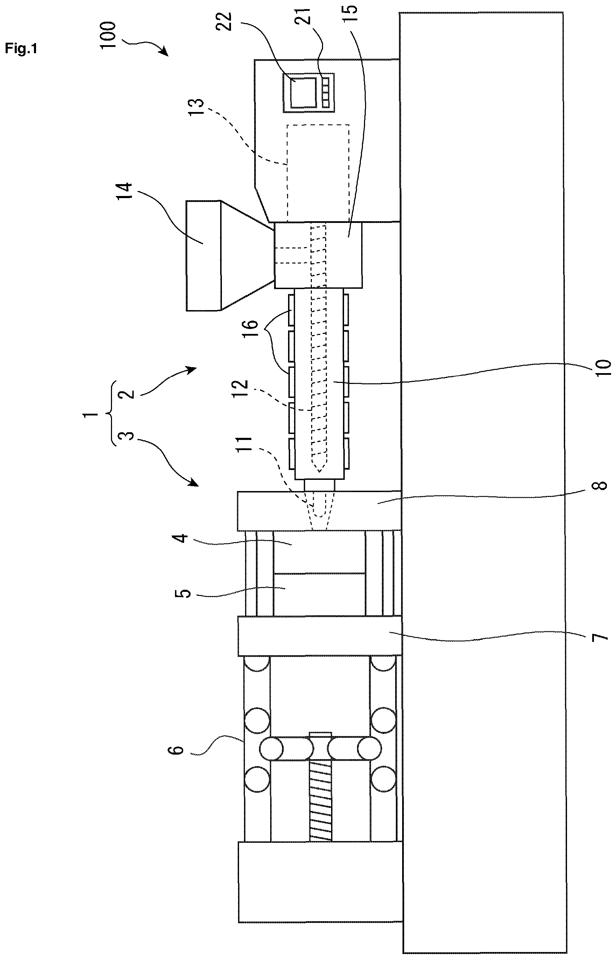

An injection molding system according to the first embodiment of the present invention is described below with reference to Figs. 1 through 3.

Fig. 1 is a schematic configuration diagram illustrating an injection molding machine 1 used for an injection molding system 100 in the present embodiment. The injection molding machine 1 produces a molded article using a granular thermoplastic resin (pellets) as a raw material. The injection molding machine 1 is provided with an injection unit 2 and a mold closing unit 3.

The mold closing unit 3 is provided with a mold opening and closing mechanism to open and close the mold by moving a movable die 5 ahead and back relative to a fixed die 4. The mold opening and closing mechanism in the present embodiment operates a toggle link mechanism 6 for bending and extension using a motor as a driving source and moves a movable die plate 7 forward and backward relative to a fixed die plate, thereby repeatedly opening and closing the fixed die 4 fixed to the fixed die plate 8 and the movable die 5 fixed to the movable die plate 7.

The injection unit 2 has a tubular heating cylinder 10, an injection nozzle 11 provided at an end of the heating cylinder 10, a screw 12 provided in the heating cylinder 10 and kneading a resin supplied into the heating cylinder 10, a supporting member 13 rotatably supporting the screw 12, a hopper 14 to be charged with a resin, and a hopper block 15 provided with the hopper 14. To an outer periphery of the heating cylinder 10, a heater 16 constituted by a band heater is attached. The heating cylinder 10 is heated to a predetermined temperature by the heater 16, thereby heat melting the resin in the heating cylinder 10.

The injection unit 2 performs plasticization and weighing of the molten resin, as a plasticization and weighing step, by moving the screw 12 back rotatably provided in the heating cylinder 10 while rotating the screw 12 by a drive section such as a motor, not shown. The injection unit 2 then moves the screw 12 ahead as an injection step, thereby injecting the molten resin from the injection nozzle 11 attached to the end of the heating cylinder 10 into the die cavity to produce a molded article. The heating cylinder 10 is moved back relative to the dies, thereby allowing execution of a purge operation to perform the plasticization, weighing, and injection described above by controlling the drive section for the screw 12 while the injection nozzle 11 is separated from the dies.

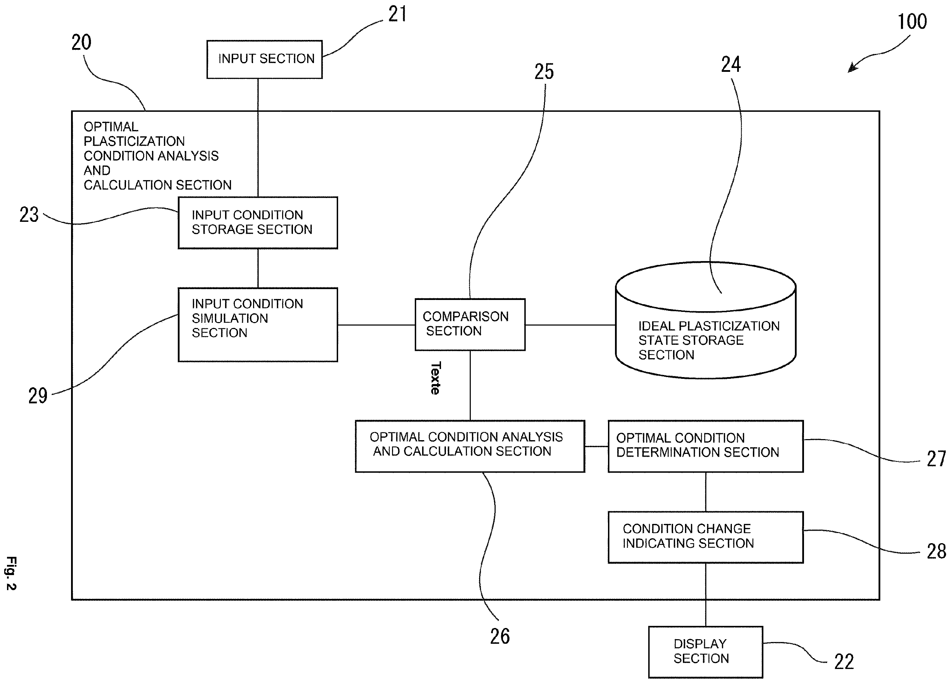

Fig. 2 is a functional block diagram illustrating an analysis and calculation system in the injection molding system 100. The injection molding system 100 has an optimal plasticization condition analysis and calculation section 20 in charge of the entire analysis and calculation, an input section 21, such as a keyboard device, provided in the injection molding machine 1, and a display section 22, such as a liquid crystal display device.

The optimal plasticization condition analysis and calculation section 20 in the injection molding system 100 of the present invention is configured with a computer provided with a central processing unit (CPU) and a memory. The optimal plasticization condition analysis and calculation section 20 is provided with an ideal plasticization state storage section 24 storing condition information to achieve an ideal state of plasticization (molten state) where the resin in the heating cylinder 10 is evenly and uniformly melted. In the ideal plasticization state storage section 24, desirable (ideal) plasticization state information is accumulated for injection molding of a resin material to be injected in various types of condition information on the molding machine side, such as the model type of the injection molding machine, the screw shape to be used, the volume of the molten resin per shot, and the molding cycle time. It is also possible to input the model type of the injection molding machine and the like in advance as the injection molding machine.

The optimal plasticization condition analysis and calculation section 20 is provided with an input condition storage section 23 to store data of plasticization conditions (input conditions) input by an operator using the input section 21 for production of a molded article.

As just described, in the injection molding system 100 of the present invention, input data input by the operator with the input section 21, such as molding machine side information (model type of the injection molding machine, screw shape to be used, volume of the molten resin per shot, molding cycle time, etc.) and the type of resin, is stored in the input condition storage section 23. The input data is then used by an input condition simulation section 29 to simulate the state of plasticization. The state of plasticization obtained by the simulation is compared with the information stored in the ideal plasticization state storage section 24 by a comparison section 25. Comparison result information by the comparison section 25 is analyzed and calculated by an optimal condition analysis and calculation section 26.

At this point, when a decision is made that the ideal state of plasticization is not obtained with the input data stored in the input condition storage section 23, a more appropriate plasticization condition (optimal plasticization condition) is calculated by the optimal condition analysis and calculation section 26 to obtain the ideal state of plasticization using the input data in the input condition storage section 23 and the information stored in the ideal plasticization state storage section 24. Based on a result of calculation by the optimal condition analysis and calculation section 26, the optimal plasticization condition is determined by an optimal condition determination section 27. At this point, when a decision is made to change to the optimal plasticization condition, an indication of a change in condition is issued by a condition change indicating section 28 and the condition to be changed is displayed on the display section 22 in the form of a message.

The optimal plasticization condition analysis and calculation section 20 achieves the input condition simulation section 29, the comparison section 25, the optimal condition analysis and calculation section 26, the optimal condition determination section 27, and the condition change indicating section 28 with the CPU to execute a control program (with an analysis program incorporated therein) stored in the memory.

The plasticization condition data stored in the input condition storage section 23 in the present embodiment described above includes, as the molding machine side information, the model type of the injection molding machine, the screw shape (length, shaft diameter, flight diameter, the number of flights, flight pitch, etc.) to be used, the volume of the molten resin per shot, the back pressure during plasticization and weighing of the resin, the molding cycle time, and the like and includes, as information on the resin to be molded, the type of resin to be used, the viscosity of the resin, and the like.

As information to be stored in the ideal plasticization state storage section 24 in advance before driving of the injection molding system 100, information on uniformity of the resin in a molten state plasticized and melted in the heating cylinder is recorded and accumulated that is obtained based on analysis results of fluidity analysis of the resin, numerous experimental results by variously changing the model type of the injection molding machine, the shape of the screw (length, shaft diameter, flight diameter, the number of flights, flight pitch, etc.), the molding cycle time, the volume of the molten resin per shot, the back pressure during plasticization and weighing of the resin, the type of resin, the viscosity of the resin, and other conditions, and the like. The ideal plasticization state storage section 24 of course has a learning function and is capable of gaining deeper intelligence by deep learning.

In the injection molding system 100 of the present invention with the above configuration, when the optimal condition analysis and calculation section 26 decides that there is a condition having a risk of nonuniform melting of the resin among the plasticization conditions (back pressure during plasticization and weighing of the resin, the number of screw rotations, and heating cylinder temperature) input by the operator or the like, the result of calculation by the optimal condition analysis and calculation section 26 is determined (optimal condition determination section 27), and based on that, information on the condition having a risk of nonuniform melting is displayed on the display section 22.

Specifically, for example, when the shape of the screw 12 is considered not matching the optimal plasticization condition, an indication of a change as "Change the screw to Model XXX" is displayed on the display section 22. When the type of resin is considered not matching the optimal plasticization condition, an indication of a change as "Change the resin to YY" is displayed on the display section.

When no change in member (screw or resin) is required as an indication of changing the plasticization conditions, no indication of a change is naturally issued. The injection molding system 100 of the present invention is also capable of, not only displaying the information to indicate a change on the display section 22, executing automatic processing to make a change to the optimal plasticization condition using the optimal plasticization condition analysis and calculation section 20. Specifically, for example, when the temperature of the resin is considered not matching the optimal plasticization condition, an indication of a change as "The set temperature of the heating cylinder has to be changed to ZZ°C" is displayed on the display section 22, followed by an indication of making temperature setting of the heating cylinder 10 to be a temperature corresponding to the change to a control mechanism, not shown, of the injection molding machine 1 to automatically change the molding condition. When a temperature change is automatically indicated and the temperature setting is changed based on that, information showing completion of the temperature change is displayed on the display section 22. That is, for example, a display of "The set temperature of the heating cylinder has changed to ZZ°C" and the like.

As has been described above, the injection molding system 100 provided in the injection molding machine 1 of the present embodiment includes: the input section 21 to input the plasticization condition for driving the injection molding machine 1; the input condition storage section 23 to store the plasticization condition input with the input section 21; the input condition simulation section 29 to simulate a state of plasticization based on the input condition; the ideal plasticization state storage section 24 to store information of an ideal state of plasticization for uniform melting of the molten resin as evenly as possible in the heating cylinder 10; the comparison section 25 to compare input data stored in the input condition storage section 23 with the information stored in the ideal plasticization state storage section 24; the optimal condition analysis and calculation section 26 to calculate an optimal plasticization condition using the data of the input condition storage section 23 and the information stored in the ideal plasticization state storage section 24 when the comparison section 25 decides that the data stored in the input condition storage section 23 is not the ideal state of plasticization as a result of the simulation by the input condition simulation section 29; the condition change indicating section 28 to indicate a change in the plasticization condition based on an optimal condition determined by the optimal condition determination section 27 based on a result of calculation by the optimal condition analysis and calculation section; and the display section 22 to display a condition necessary to make a change to the optimal plasticization condition.

In the injection molding system 100 of the present invention thus configured, when the plasticization condition input by the operator or the like has a possibility of causing defective molding without obtaining ideal plasticization, a message to indicate a change in the plasticization condition to the optimal plasticization condition is displayed on the display section 22. A change is also automatically made to the desirable plasticization condition. It is thus possible to readily change the plasticization condition for injection molding to the optimal plasticization condition without relying on experience and intuition of the operator or the like as in the past. In other words, it is possible to perform injection molding in the optimal plasticization condition regardless of the experience of the operator or the like, thereby allowing prevention of defects in molded articles to be produced.

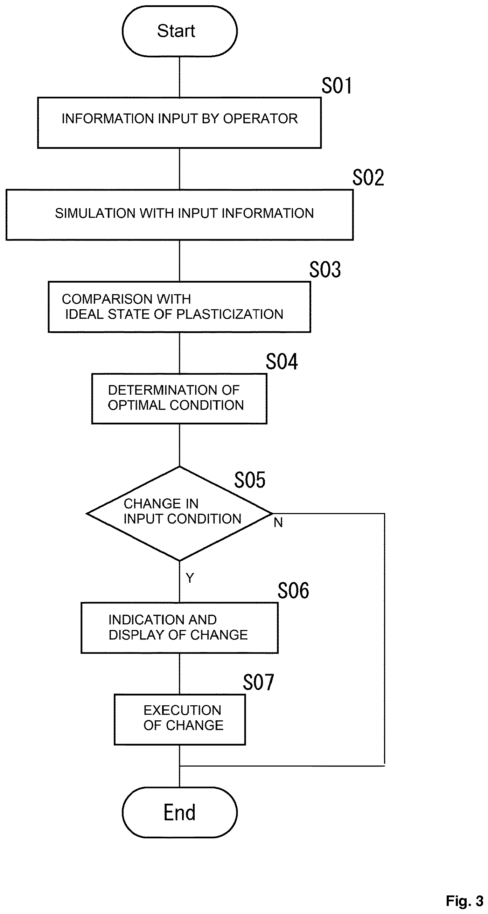

Operation steps by the injection molding system 100 of the present invention are described below with reference to Fig. 3.

The injection molding system 100 of the present invention uses the injection molding machine 1 that performs a step of plasticization and weighing of the molten resin by moving the screw 12 in the heating cylinder 10 back while rotating the screw 12, followed by a forward movement of the screw 12 as an injection step to inject the molten resin from the injection nozzle 11 attached to an end of the heating cylinder into the die cavity.

Using the input section 21, an operator inputs plasticization conditions for driving the injection molding machine 1 (step S01). The plasticization conditions (input conditions) input with the input section 21 is stored in the input condition storage section 23.

Using the input conditions input with the input section 21, the state of plasticization is simulated by the input condition simulation section 29 (step S02).

In advance, the information of the ideal state of plasticization for uniform melting of the molten resin in the heating cylinder is stored in the ideal plasticization state storage section 24.

Based on the result of simulating the state of plasticization, the comparison section 25 compares the data stored in the input condition storage section 23 with the information stored in the ideal plasticization state storage section 24 (step S03).

The optimal condition analysis and calculation section 26 analyzes and calculates whether the simulation based on the input data stored in the input condition storage section 23 is the ideal state of plasticization as a result of the comparison using the data in the input condition storage section 23 and the information stored in the ideal plasticization state storage section 24, and the optimal condition determination section 27 determines the optimal plasticization condition when the simulation based on the input data is decided not to be the ideal state of plasticization (step S04).

In accordance with the presence of a change in the input conditions (step S05), the condition change indicating section 28 indicates a change to the optimal plasticization condition based on the result of calculation determined by the optimal condition determination section 27 and displays information necessary to make the change to the optimal plasticization condition on the display section 22 (step S06).

The present system thus executes the change to the optimal plasticization condition (step S07).

As described above, what sort of a molded article to be produced basically depends on matters determined in advance (input information), and plasticization conditions appropriate to the molding (output information) have to be determined. To find the plasticization conditions, decision criterion is required.

In this context, the input information includes the type of resin, the molding cycle time, the amount of injection, the shape and the diameter of the screw, and the like, and the decision criterion is the ideal molten state (state of plasticization), which is decided by whether to be capable of achieving a state of uniform temperature in the molten resin, uniformization of the density in the molten resin, and uniformization of the viscosity in the molten resin and then the optimal condition is calculated to obtain the temperature, the number of screw rotations, the back pressure, and the like and issue an indication of the optimal plasticization condition. When it is not possible to perform molding, an indication to change the shape of the screw and the like is issued.

When suitability of the state for molding in initial conditions is decided by simulation, the decision is made based on whether the plasticization time is stable, whether the injection speed is stable, whether the injection pressure is stable, whether the weighing torque is stable, whether the residual melt occurs, whether the resin viscosity is stable, whether the specific energy is stable (by fluidity analysis), whether the temperature of the resin is in the ideal state (by fluidity analysis), and the like.

The process for determination of the molding conditions using fluidity analysis simulation is as follows. First, the information determined by the input by the operator is 1. the screw (diameter/shape), 2. the molding cycle time, 3. the amount of injection, and 4. the type of resin.

### 1. Determine the number of screw rotations

Since the amount of the resin that a specific screw is allowed to feed per rotation is determined, the weighing time and the feed amount are determined by defining the molding cycle time and the amount of injection and thus they are calculated.

### 2. Determine the heating cylinder temperature

Determination of the number of screw rotations determines the residence time of the resin. Since the melting point is determined by the type of resin, it is possible to determine the temperature of the heating cylinder to completely melt the resin. Base conditions for the temperature rise to how many degrees for how many seconds (screw rotation speed, heating cylinder temperature, etc.) are determined.

### 3. Compare and decide inconvenience in the case of molding in the base conditions

What sort of problem occurs in the case of molding directly in the input conditions is decided and the cause is decided to make a change to the ideal molten state.

### 4. Perform fluidity analysis based on the base conditions for optimization

Based on the matters confirmed in 3 above, optimization is performed to finally determine conditions for stabilization.

More specifically, steps for determination of molding conditions using fluidity analysis simulation are described where the weight is 15 g as molded article the information, the molding cycle time is 20 seconds, the screw diameter is X mm and the screw shape is Y as the machine information, the melting point is T°C and the specific heat is cKJ/kg-K as the resin information.

### STEP 1 Determine the number of screw rotations

Considering the molded article stripping time on condition that 15 g of a molded article is molded with a molding cycle time of 20 s, the substantial molding cycle time is 15 s.

Using this, the number of screw rotations allowing 1 g/s is determined. The number of rotations is defined as A rpm.

### STEP 2 Determine the heating cylinder temperature

First, an amount of residual resin when rotating the screw at A rpm is calculated.

The heating cylinder temperature is then set to have the resin at approximately a temperature of the melting point + 10°C during the residence time. At this point, it is possible to calculate using the quantity of heat from the heater and the specific heat of the resin. Using that, the heating cylinder temperature is defined as B°C.

### STEP 3 Make a decision on the situation

The number of screw rotations and the heating cylinder temperature are set at the conditions determined above for purging to make a decision on the situation.

Simultaneously, using fluidity analysis, the situation at this point is calculated as follows.
(1) Confirm variation in weighing time

At this point, if the variation is large, the back pressure is raised to measure whether the variation is stabilized.

### (2) The raise in back pressure causes an increase in weighing time

The number of screw rotations is increased to adjust the weighing time.

### (3) Measure the resin viscosity using a resin viscosity measurement system

Measurement of the viscosity allows estimation of the temperature of the resin. The viscosity is adjusted by raising or lowering the temperature depending on the situation. (4) The fluidity analysis is performed based on the back pressure, the number of screw rotations, and the temperature of the resin determined by the operator with the machine. A decision is thus made whether there is an unmelted region and whether an error occurs for plasticization in the set conditions is calculated.

### STEP 4 Determine the plasticization conditions

The plasticization conditions are determined as above. If the optimal solution is not obtained, a change of the resin or a change in the screw shape or diameter is indicated.

The decision criterion for the ideal molten state after completion of the plasticization is described here from the perspective of the stability of the temperature, the stability of the density, and the stability of the viscosity.

### (1) Stability of the temperature of the resin

The stability of the temperature of the resin is an extremely important point of view to decide the ideal state of plasticization. If the temperature of the resin is not uniform, all conditions become unstable. In the case of not reaching the resin melting temperature, the resin turns out to be non-plastic. If the internal temperature of the resin greatly varies, the molded articles are not stable. Variation in cooling rate causes a change in the state of shrinkage. In particular, the shrinkage is affected by the number of screw rotations, the back pressure, and the set temperature of the heating cylinder.

Although it is difficult to measure the actual temperature of the resin, estimation of the actual temperature is allowed by calculating the quantity of heat of the resin using fluidity analysis.

### (2) Stability of the density of the resin

If the density of the resin is not stable, weighing sometimes becomes unstable. As a result, the amount of injection is not stabilized and thus the molded articles are not stabilized. In particular, the stability of the density is affected by the number of screw rotations and the back pressure.

This is confirmed by checking the stability of the speed of the backward movement of the screw. It is thus possible to estimate the stability of the density by calculating how the variation in pressure becomes using fluidity analysis.

### (3) Stability of the resin viscosity

If the resin viscosity is not stabilized, the resulting amount of injection is not stabilized and thus the molded articles are not stabilized. The stability of the resin viscosity is particularly affected by the back pressure and the set temperature. It is possible to estimate the temperature and calculate the resin viscosity using fluidity analysis.

It is possible to recognize the stability of the resin viscosity by confirming the pressure during injection. In addition, use of a resin viscosity measurement system that is already developed allows actual measurement. Such a system calculates based on the shear force, the speed, and the pressure while going through the nozzle.

Moreover, the display to indicate a change displayed on the display section 22 may be, not only a message by a text, but by a graphic or a combination of a text and a graphic.

### Second Embodiment

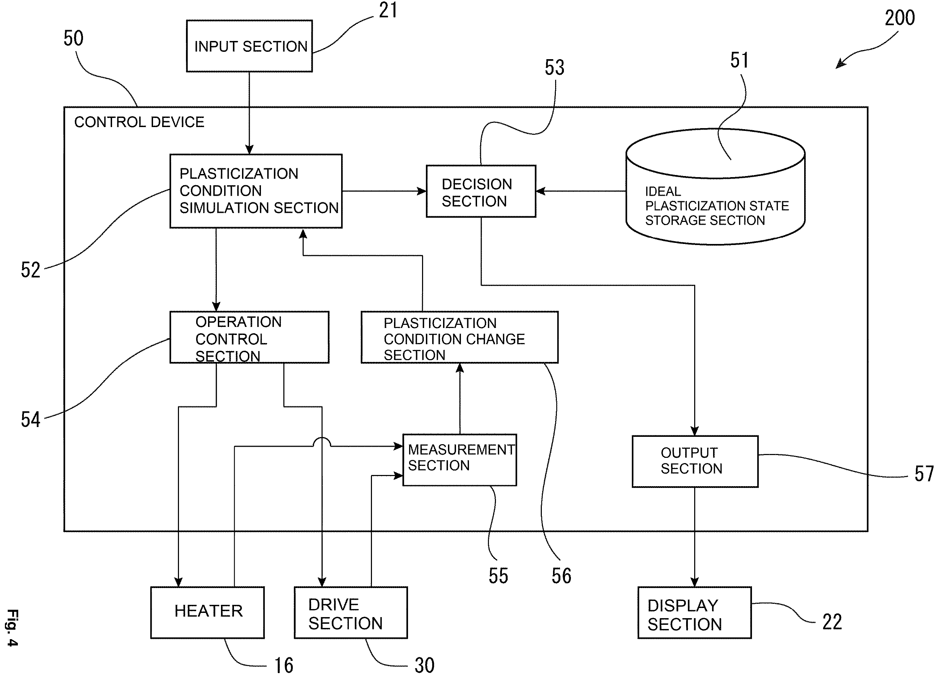

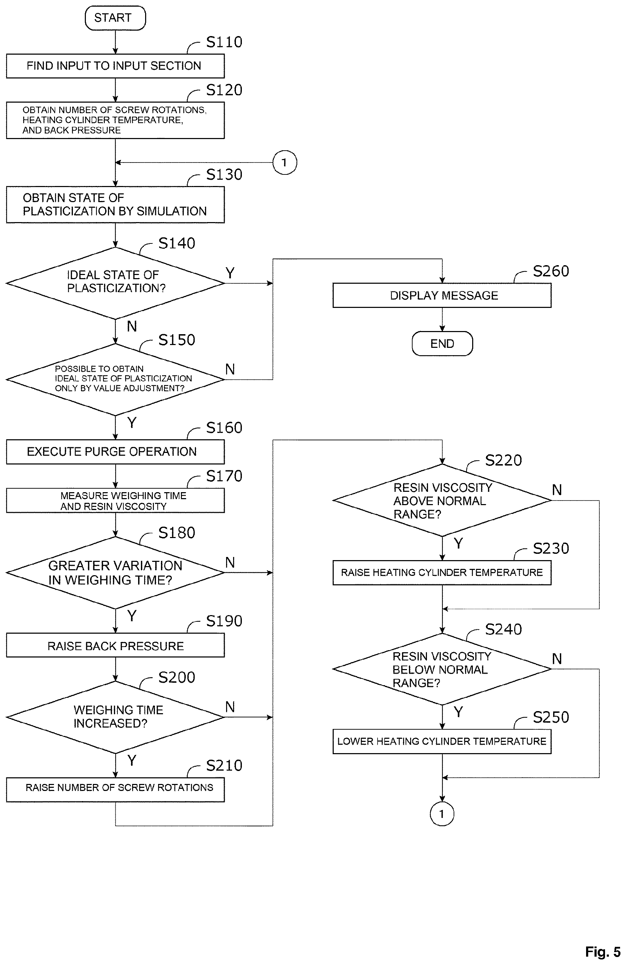

An injection molding system according to the second embodiment of the present invention is described with reference to Figs. 4 and 5. The same reference signs are given to the configurations same as those in the first embodiment.

An injection molding system 200 in the present embodiment has the injection molding machine 1 described above in the first embodiment and a control device 50 in charge of operations of the entire system. The control device 50 is configured with a computer provided with a central processing unit (CPU) and a memory.

Fig. 4 illustrates a functional block diagram of the injection molding system 200. The control device 50 has an ideal plasticization state storage section 51, a plasticization state simulation section 52, a decision section 53, an operation control section 54, a measurement section 55, a plasticization condition change section 56, and an output section 57.

The ideal plasticization state storage section 51 is configured with a storage device, such as a hard disk drive and a nonvolatile memory, and stores a decision criterion used to decide whether a thermoplastic resin is in an ideal state of plasticization. The ideal state of plasticization refers to a state of plasticization where a weighed resin is melted in the heating cylinder 10 evenly and uniformly (including roughly uniformly to the allowable extent) for the temperature, the density, and the pressure. The ideal plasticization state storage section 51 stores the name of the resin (information specifying the resin) in association with the properties (specific heat of the resin, etc.). It also stores the name of the screw 12 (information specifying the screw 12) in association with the shape (length, shaft diameter, flight diameter, flight pitch, etc.) and the back pressure to be a reference in accordance with the number of rotations. The names of the resin and the screw 12 may be, other than the names, information specifying them such as identification numbers, reference signs, and symbols.

The input section 21 is same as that in the first embodiment. In the present embodiment, to the input section 21, the name of the resin, the name of the screw 12, the mass of a molded article (amount of resin per injection), and the molding cycle time are input as input conditions. The name of the screw 12 may be set in advance when the screw 12 is installed in the injection molding machine 1.

The plasticization state simulation section 52 simulates the state of plasticization using the plasticization conditions obtained from the input conditions input to the input section 21 or plasticization conditions after a change by the plasticization condition change section 56 described later.

Specifically, the plasticization state simulation section 52 calculates plasticization time by subtracting time taken for stripping of the molded article from the dies from the molding cycle time. The mass of the molded article is then divided by the plasticization time to calculate the amount of resin to be transferred per unit time by the screw 12. The number of rotations is then calculated that is required to transfer the amount of resin calculated based on the shape of the screw specified by the name of the screw 12. The ideal plasticization state storage section 51 may store in advance the amount of resin allowed to be transferred per unit time by the screw 12. The plasticization state simulation section 52 then calculates the residence time of the resin in the heating cylinder 10 while rotating the screw 12 at the number of rotations thus calculated. Then, using the specific heat of the resin, the temperature of the heating cylinder 10 is calculated for complete melting for the calculated residence time. The back pressure in accordance with the calculated number of rotations of the screw 12 is obtained from the ideal plasticization state storage section 51. The plasticization state simulation section 52 uses the plasticization conditions thus obtained (number of screw rotations, back pressure and heating cylinder temperature during plasticization and weighing of the resin) to obtain the state of plasticization by fluidity analysis. Alternatively, it uses plasticization conditions after a change by the plasticization condition change section 56 described later to obtain the state of plasticization by fluidity analysis.

The decision section 53 decides whether the state of plasticization obtained by the plasticization state simulation section 52 is the ideal state of plasticization. Specifically, whether the resin after weighing has uniform distribution of the temperature, the density, and the pressure is confirmed using the decision criterion stored in the ideal plasticization state storage section 51 based on the results of the fluidity analysis. A decision is then made to be the ideal state of plasticization when the temperature, the density, and the pressure are uniformly distributed, and not to be the ideal state of plasticization when they are not uniformly distributed. When the temperature, the density, and the pressure are markedly uneven and far from a uniform distribution, the decision section 53 decides that the resin is not in the ideal state of plasticization and that the ideal state of plasticization is not obtained only by adjusting the number of screw rotations, the back pressure, and the heating cylinder temperature.

When the decision section 53 decides not to be in the ideal state of plasticization, the operation control section 54 controls a drive section 30 for the screw 12 and the heater 16 using the number of screw rotations, the back pressure, and the heating cylinder temperature used for the simulation in the plasticization state simulation section 52 to execute a plurality (e.g., approximately from three to ten) of purge operations.

The measurement section 55 measures the weighing time during the purge operations and the viscosity of the weighed resin.

The plasticization condition change section 56 detects variation in weighing time measured by the measurement section 55, and if the variation is greater than a reference value, raises the back pressure. If the weighing time increases due to the raise of the back pressure, the number of screw rotations is raised to adjust the weighing time so as to fall within the molding cycle time. The plasticization condition change section 56 lowers the heating cylinder temperature when the viscosity of the resin measured by the measurement section 55 is below a normal range (low in viscosity), and raises the heating cylinder temperature when the viscosity is above the normal range (high in viscosity). The reference value for the variation in weighing time and the reference value (normal range) for the viscosity of the resin are stored in the ideal plasticization state storage section 51. The range of a raise of the back pressure and the range of a change in the heating cylinder temperature are also stored in the ideal plasticization state storage section 51.

When the decision section 53 decides to be the ideal state of plasticization, the output section 57 displays (outputs) the number of screw rotations, the back pressure, and the heating cylinder temperature on the display section 22 as values to be set. When the decision section 53 decides that the resin is not in the ideal state of plasticization and the ideal state of plasticization is not obtained only by adjusting the number of screw rotations, the back pressure, and the heating cylinder temperature, the output section 53 displays a message to prompt replacement of the screw 12 or a change of the resin on the display section 22. Such display is the same as that in the first embodiment. The operator may use the plasticization conditions displayed on the display section 22 as set values and may investigate replacement of the screw 12 and a change of the resin. The plasticization conditions output by the output section 57 may be automatically set.

The control device 50 achieves the plasticization state simulation section 52, the decision section 53, the operation control section 54, the measurement section 55, the plasticization condition change section 56, and the output section 57 with the CPU to execute a control program (with an analysis program incorporated therein) stored in the memory.

An example of operations of the control device 50 in the injection molding system 200 of the present embodiment according to the present invention is then described with reference to the flow chart in Fig. 5.

When the name of the resin, the name of the screw 12, the mass of the molded article, and the molding cycle time as the input conditions are input to the input section 21 (S110), the control device 50 calculates the number of rotations of the screw 12 and the temperature of the heating cylinder 10 from them and obtains the back pressure in accordance with the number of rotations (S120). The control device 50 then performs simulation using these values to obtain the state of plasticization of the weighed resin (S130).

The control device 50 decides whether the state of plasticization obtained by the simulation is ideal (S140).

That is, when deciding to be the ideal state of plasticization (Y at S140), the control device 50 displays a message showing the number of rotations of the screw 12, the back pressure, and the temperature of the heating cylinder 10 used for the simulation on the display section 22 (S260) and terminates the process. When deciding that the resin is not in the ideal state of plasticization (N at S140) and the ideal state of plasticization is not obtained only by adjusting the number of screw rotations, the back pressure, and the heating cylinder temperature (N at S150), the control device 50 displays a message to prompt replacement of the screw 12 or a change of the resin on the display section 22 (S260) and terminates the process.

When deciding that the resin is not in the ideal state of plasticization (S140) and the ideal state of plasticization is obtained only by adjusting the number of screw rotations, the back pressure, and the heating cylinder temperature (Y at S150), the control device 50 executes a plurality of purge operations using the number of rotations of the screw 12, the back pressure, and the temperature of the heating cylinder 10 used for the simulation (S160) to measure the weighing time and the viscosity of the resin (S170).

When the variation in weighing time is greater than the reference value (Y at S180), the control device 50 raises the back pressure (S190). When the weighing time increases due to the raise of the back pressure (Y at S200), the control device 50 raises the number of screw rotations in such a manner that the weighing time falls within the molding cycle time (S210). The control device 50 raises the heating cylinder temperature (S230) when the viscosity of the resin is high and above the normal range (Y at S220) and lowers the heating cylinder temperature (S250) when the viscosity of the resin is low and below the normal range (Y at S240).

The control device 50 then repeats the simulation of the state of plasticization (S130), the decisions of the ideal state of plasticization (S140 and S150), the purge operations and the measurement (S160 and S170), changes in the number of screw rotations, the heating cylinder temperature, and the back pressure (S180 through S250) in the same manner as above, and when the resin becomes the ideal state of plasticization (Y at S140) or the resin is not in the ideal state of plasticization and the ideal state of plasticization is not obtained only by adjusting the plasticization conditions (N at S150), displays a message (S260) and terminates the process.

As just described, according to the injection molding system 200 in the present embodiment, the control device 50 obtains the plasticization conditions based on the input conditions input to the input section 21 to simulate the state of plasticization using the plasticization conditions. The control device 50 decides whether the state of plasticization obtained by the simulation is the ideal state of plasticization. When deciding not to be the ideal state of plasticization, the control device 50 changes the plasticization conditions. When deciding to be the ideal state of plasticization, the control device 50 displays the plasticization conditions used in the simulation on the display section 22 for output. When the plasticization conditions are changed, the control device 50 then simulates the state of plasticization using the plasticization conditions after the change. The simulation is thus performed using the plasticization conditions obtained based on the input conditions to the input section 21, and as a result, when the ideal state of plasticization is not obtained by the plasticization conditions, the plasticization conditions are changed to perform the simulation again. Since the plasticization conditions are thus automatically changed to obtain the ideal state of plasticization, it is possible to readily change the plasticization conditions for injection molding to the optimal conditions without relying on the experience and the intuition of the operator or the like as in the past. In other words, it is possible to perform injection molding in the optimal plasticization conditions regardless of the experience of the operator or the like, thereby allowing prevention of defects in molded articles to be produced.

The control device 50 controls the drive section for the screw 12 and the heater 16 to perform purge operations using the plasticization conditions used for the simulation. The control device 50 measures the weighing time and the viscosity of the resin during the purge operations. The control device 50 then changes the plasticization conditions using the measurement result. Since the plasticization conditions are thus changed based on the actual measurement, it is possible to more efficiently obtain the plasticization conditions for the ideal state of plasticization.

The input conditions input to the input section 21 include the name of the resin, the name of the screw 12, the mass of the molded article (amount of resin per injection), and the molding cycle time. Such configuration allows the plasticization conditions for the ideal state of plasticization to be obtained with fewer input conditions.

The plasticization conditions include the number of screw rotations, the back pressure during plasticization and weighing of the resin, and the heating cylinder temperature. Such configuration allows acquisition of relatively important conditions among conditions on the plasticization.

The plasticization condition change section 56 in the second embodiment described above changes the number of screw rotations, the heating cylinder temperature, and the back pressure based on the weighing time and the viscosity of the resin measured during the purge operations. For example, combinations of the resin (name of the resin), the screw (name of the screw), the number of screw rotations, the heating cylinder temperature, and the back pressure for the ideal state of plasticization may be stored in the ideal plasticization state storage section 51 in advance. When the decision section 53 decides not to be the ideal state of plasticization, the plasticization condition change section 56 compares the name of the resin and the name of the screw input to the input section 21 and the number of screw rotations, the back pressure, and the heating cylinder temperature used for the simulation with the above combination stored in the ideal plasticization state storage section 51. Based on the combination closest in the distance (extent of the differences) from above, the number of screw rotations, the back pressure, and the heating cylinder temperature are then changed. Such configuration may be employed.

### Reference Signs List

### First Embodiment

- 100: Injection Molding System
- 1: Injection Molding Machine
- 2: Injection Unit
- 3: Mold Closing Unit
- 4: Fixed Die
- 5: Movable Die
- 6: Toggle Link Mechanism
- 7: Movable Die Plate
- 8: Fixed Die Plate
- 10: Heating Cylinder
- 11: Injection Nozzle
- 12: Screw
- 13: Supporting Member
- 14: Hopper
- 15: Hopper Block
- 16: Heater
- 20: Optimal Plasticization Condition Analysis and Calculation Section
- 21: Input Section
- 22: Display Section
- 23: Input Condition Storage Section
- 24: Ideal Plasticization State Storage Section
- 25: Comparison Section
- 26: Optimal Condition Analysis and Calculation Section
- 27: Optimal Condition Determination Section
- 28: Condition Change Indicating Section
- 29: Input Condition Simulation Section

### Second Embodiment

- 200: Injection Molding System
- 50: Control Device
- 51: Ideal Plasticization State Storage Section
- 52: Plasticization State Simulation Section
- 53: Decision Section
- 54: Operation Control Section
- 55: Measurement Section
- 56: Plasticization Condition Change Section
- 57: Output Section

## Claims

1. An injection molding system (100), provided with an injection molding machine (1) to inject a molten resin from an injection nozzle (11) attached to an end of a heating cylinder (10) into a die cavity by moving a screw (12) in the heating cylinder back while rotating the screw (12) for a step of plasticization and weighing of the molten resin, followed by a forward movement of the screw (12) as an injection step, the system comprising:
an input section (21) configured to input a plasticization condition for driving the injection molding machine (1);
an input condition storage section (23) configured to store the plasticization condition input with the input section (21);
an input condition simulation section (29) configured to simulate a state of plasticization by the input condition input with the input section (21);
an ideal plasticization state storage section (24) configured to store information of an ideal state of plasticization for uniform melting of the molten resin in the heating cylinder (10);
a comparison section (25) configured to compare data stored in the input condition storage section (23) with the information stored in the ideal plasticization state storage section (24) based on a result of simulating the state of plasticization;
an optimal condition analysis and calculation section (26) configured to analyze and calculate whether the simulation based on the input data stored in the input condition storage section (23) is the ideal state of plasticization as a result of the comparison section (25) using the data of the input condition storage section (23) and the information stored in the ideal plasticization state storage section (24); and
an optimal condition determination section (27) configured to determine an optimal plasticization condition when the simulation based on the input data is determined not to be the ideal state of plasticization.

2. The injection molding system (100) according to Claim 1, comprising a condition change indicating section (28) configured to display information necessary to make a change to the optimal plasticization condition on a display section (22) based on a result of calculation determined by the optimal condition determination section (27).

3. The injection molding system (100) according to Claim 1 or 2, wherein the plasticization condition input with the input section (21) and stored in the input condition storage section (23) includes at least any one of a type of resin, a temperature of the resin, a shape of the screw (12), molding cycle time, and a back pressure during plasticization and weighing of the resin.

4. The injection molding system (100) according to any one of Claims 1 through 3, wherein the information of the ideal state of plasticization stored in the ideal plasticization state storage section (24) is obtained using information on uniformity of a molten state of the resin plasticized and melted in the heating cylinder (10).

5. The injection molding system (100) claimed in any one of claims 1 to 4, wherein the injection molding system (100) comprises: a heating cylinder (10) to be supplied with a thermoplastic resin; a screw (12) provided in the heating cylinder (10); and a heater (16) attached to the heating cylinder (10), wherein
the injection molding system (100) further comprises
a plasticization state simulation section (52) configured to obtain a plasticization condition based on an input condition input to an input section (21) and simulate a state of plasticization using the plasticization condition,
a decision section (53) configured to decide whether the state of plasticization obtained by the plasticization state simulation section (52) is an ideal state of plasticization,
a plasticization condition change section (56) configured to change the plasticization condition when the decision section (52) decides not to be the ideal state of plasticization, and
an output section (57) configured to output the plasticization condition used in the plasticization state simulation section (52) when the decision section (53) decides to be the ideal state of plasticization, and,
when the plasticization condition is changed by the plasticization condition change section (56), the plasticization state simulation section (52) simulates the state of plasticization using the plasticization condition after the change.

6. The injection molding system (100) according to Claim 5, further comprising:
an operation control section (54) configured to control a drive section for the screw (12) and the heater (16) to perform a purge operation using the plasticization condition used for the simulation by the plasticization state simulation section (52); and
a measurement section (55) configured to measure at least one of weighing time and resin viscosity in the purge operation, wherein
the plasticization condition change section (56) changes the plasticization condition using a measurement result by the measurement section (55).

7. The injection molding system (100) according to Claim 5 or 6, wherein the input condition includes information specifying the resin, information specifying the screw (12), an amount of resin per injection, and molding cycle time.

8. The injection molding system (100) according to Claim 5 or 6, wherein the plasticization condition includes number of screw rotations, a back pressure during plasticization and weighing of the resin, and a heating cylinder temperature.

## Patentansprüche

1. Spritzgießsystem (100), ausgestattet mit einer Spritzgießvorrichtung (1), um ein geschmolzenes Harz aus einer an einem Ende eines Heizzylinders (10) angebrachten Einspritzdüse (11) in einen Formhohlraum einzuspritzen, indem eine Schnecke (12) in dem Heizzylinder (10) zurückbewegt wird, während die Schnecke (12) für einen Plastifizierungsschritt gedreht wird und das geschmolzene Harz gewogen wird, gefolgt von einer Vorwärtsbewegung der Schnecke (12) als Einspritzschritt, wobei das System Folgendes umfasst:
einen Eingabebereich (21), der konfiguriert ist, eine Plastifizierungsbedingung zum Antreiben der Spritzgießvorrichtung (1) einzugeben;
einen Eingabebedingungs-Speicherbereich (23), der konfiguriert ist, die mit dem Eingabebereich (21) eingegebene Plastifizierungsbedingung zu speichern;
einen Eingabebedingungs-Simulationsbereich (29), der konfiguriert ist, einen Plastifizierungszustand durch die mit dem Eingabebereich (21) eingegebene Eingabebedingung zu simulieren;
einen Speicherbereich für den idealen Plastifizierungszustand (24), der konfiguriert ist, Informationen über einen idealen Plastifizierungszustand für ein gleichmäßiges Schmelzen des geschmolzenen Harzes in dem Heizzylinder (10) zu speichern;
einen Vergleichsbereich (25), der konfiguriert ist, die in dem Eingabebedingungs-Speicherbereich (23) gespeicherten Daten mit den in dem Speicherbereich für den idealen Plastifizierungszustand (24) gespeicherten Informationen basierend auf einem Ergebnis einer Simulation des Plastifizierungszustands zu vergleichen;
einen Bereich zur Analyse und Berechnung eines optimalen Zustands (26), der konfiguriert ist, zu analysieren und zu berechnen, ob die Simulation basierend auf den in dem Eingabebedingungs-Speicherbereich (23) gespeicherten Eingabedaten dem idealen Plastifizierungszustand als Ergebnis des Vergleichsbereichs (25), der die Daten des Eingabebedingungs-Speicherbereichs (23) und die Informationen, die in dem Speicherbereich für den idealen Plastifizierungszustand (24) gespeichert sind, verwendet, entspricht; und
einen Bereich zur Bestimmung der optimalen Bedingung (27), der konfiguriert ist, eine optimale Plastifizierungsbedingung zu bestimmen, wenn festgestellt wird, dass die auf den Eingabedaten basierende Simulation nicht dem idealen Plastifizierungszustand entspricht.

2. Spritzgießsystem (100) nach Anspruch 1, das einen Zustandsänderungs-Anzeigebereich (28) umfasst, der konfiguriert ist, auf einem Anzeigebereich (22) Informationen anzuzeigen, die erforderlich sind, um eine Änderung bei der optimalen Plastifizierungsbedingung basierend auf einem Ergebnis einer von dem Bereich zur Bestimmung der optimalen Bedingung (27) ermittelten Berechnung vorzunehmen.

3. Spritzgießsystem (100) nach Anspruch 1 oder 2, wobei die mit dem Eingabebereich (21) eingegebene und im Eingabebedingungs-Speicherbereich (23) gespeicherte Plastifizierungsbedingung mindestens eines eines Harztyps, einer Temperatur des Harzes, einer Form der Schnecke (12), einer Formzykluszeit und eines Gegendrucks beim Plastifizieren und eines Wiegens des Harzes umfasst.

4. Spritzgießsystem (100) nach einem der Ansprüche 1 bis 3, wobei die in dem Speicherbereich für den idealen Plastifizierungszustand (24) gespeicherten Informationen über den idealen Plastifizierungszustand unter Verwendung von Informationen über die Gleichförmigkeit eines geschmolzenen Zustands des in dem Heizzylinder (10) plastifizierten und geschmolzenen Harzes erhalten werden.

5. Spritzgießsystem (100) nach einem der Ansprüche 1 bis 4, wobei das Spritzgießsystem (100) Folgendes umfasst: einen Heizzylinder (10), in den ein thermoplastisches Harz eingespeist wird; eine in dem Heizzylinder (10) vorgesehene Schnecke (12); und eine an dem Heizzylinder (10) angebrachte Heizvorrichtung (16), wobei das Spritzgießsystem ferner Folgendes umfasst:
einen Plastifizierungszustands-Simulationsbereich (52), der konfiguriert ist, eine Plastifizierungsbedingung basierend auf einer in einen Eingabebereich (21) eingegebenen Eingabebedingung zu erhalten und einen Plastifizierungszustand unter Verwendung der Plastifizierungsbedingung zu simulieren,
einen Entscheidungsbereich (53), der konfiguriert ist, zu entscheiden, ob der durch den Plastifizierungszustands-Simulationsbereich (52) erhaltene Plastifizierungszustand einem idealen Plastifizierungszustand entspricht,
einen Plastifizierungsbedingungs-Änderungsbereich (56), der konfiguriert ist, die Plastifizierungsbedingung zu ändern, wenn der Entscheidungsbereich (52) entscheidet, dass es sich nicht um den idealen Plastifizierungszustand handelt, und
einen Ausgabebereich (57), der konfiguriert ist, die Plastifizierungsbedingung auszugeben, die im Plastifizierungszustands-Simulationsbereich (52) verwendet wird, wenn der Entscheidungsbereich (53) entscheidet, dass es sich um den idealen Plastifizierungszustand handelt, und,
wenn die Plastifizierungsbedingung durch den Plastifizierungsbedingungs-Änderungsbereich (56) geändert wird, der Plastifizierungszustands-Simulationsbereich (52) den Plastifizierungszustand unter Verwendung der Plastifizierungsbedingung nach der Änderung simuliert.

6. Spritzgießsystem (100) nach Anspruch 5, ferner umfassend:
einen Betriebssteuerbereich (54), der konfiguriert ist, einen Antriebsbereich für die Schnecke (12) und die Heizvorrichtung (16) zu steuern, um einen Spülvorgang unter Verwendung der Plastifizierungsbedingung durchzuführen, die für die Simulation durch den Plastifizierungszustands-Simulationsbereich (52) verwendet wird; und
einen Messbereich (55), der konfiguriert ist, mindestens eine einer Wiegezeit und einer Harzviskosität im Spülvorgang zu messen, wobei
der Plastifizierungsbedingungs-Änderungsbereich (56) die Plastifizierungsbedingung unter Verwendung eines Messergebnisses durch den Messbereich (55) ändert.

7. Spritzgießsystem (100) nach Anspruch 5 oder 6, wobei die Eingabebedingung das Harz spezifizierende Informationen, die Schnecke (12) spezifizierende Informationen, eine Harzmenge pro Einspritzung und eine Formzykluszeit umfasst.

8. Spritzgießsystem (100) nach Anspruch 5 oder 6, wobei die Plastifizierungsbedingung die Anzahl der Schneckenumdrehungen, einen Gegendruck während der Plastifizierung und dem Wiegen des Harzes und eine Heizzylindertemperatur umfasst.

## Revendications

1. Système de moulage par injection (100) équipé d'une machine de moulage par injection (1) pour injecter une résine fondue à partir d'une buse d'injection (11) attachée à une extrémité d'un cylindre chauffant (10) dans une cavité de matrice en reculant une vis (12) dans le cylindre chauffant tout en tournant la vis (12) pour une étape de plastification et de pesage de la résine fondue, ce qui est suivi par un mouvement vers l'avant de la vis (12) en tant qu'étape d'injection, le système comprenant :
une section d'entrée (21) configurée pour entrer une condition de plastification pour entraîner la machine de moulage par injection (1) ;
une section d'enregistrement de condition d'entrée (23) configurée pour enregistrer la condition de plastification entrée avec la section d'entrée (21) ;
une section de simulation de condition entrée (29) configurée pour simuler un état de plastification par la condition entrée avec la section d'entrée (21) ;
une section d'enregistrement d'état de plastification idéal (24) configurée pour enregistrer des informations d'un état idéal de plastification pour une fusion uniforme de la résine fondue dans le cylindre chauffant (10) ;
une section de comparaison (25) configurée pour comparer des données enregistrées dans la section d'enregistrement de condition entrée (23) avec les informations enregistrées dans la section d'enregistrement d'état de plastification idéal (24) en se basant sur un résultat de simulation de l'état de plastification ;
une section d'analyse et de calcul de condition optimale (26) configurée pour analyser et calculer si la simulation basée sur les données d'entrée enregistrées dans la section d'enregistrement de condition entrée (23) est l'état idéal de plastification en résultat du fait que la section de comparaison (25) utilise les données de la section d'enregistrement de condition entrée (23) et les informations enregistrées dans la section d'enregistrement d'état de plastification idéal (24) ; et
une section de détermination de condition optimale (27) configurée pour déterminer une condition de plastification optimale lorsque la simulation basée sur les données d'entrée est déterminée comme n'étant pas l'état idéal de plastification.

2. Système de moulage par injection (100) selon la revendication 1, comprenant une section d'indication de changement de condition (28) configuré pour afficher des informations nécessaires pour faire un changement de la condition de plastification optimale sur une section d'affichage (22) en se basant sur un résultat de calcul déterminé par la section de détermination de condition optimale (27).

3. Système de moulage par injection (100) selon la revendication 1 ou 2, dans lequel la condition de plastification entrée avec la section d'entrée (21) et enregistrée dans la section d'enregistrement de section entrée (23) inclut au moins un paramètre quelconque parmi un type de résine, une température de la résine, une forme de la vis (12), la durée du cycle de moulage, et une contre-pression pendant la plastification et le pesage de la résine.

4. Système de moulage par injection (100) selon l'une quelconque des revendications 1 à 3, dans lequel les informations de l'état idéal de plastification enregistrées dans la section d'enregistrement d'état de plastification idéal (24) sont obtenues en utilisant des informations sur l'uniformité d'un état fondu de la résine plastifiée et fondu dans le cylindre chauffant (10).

5. Système de moulage par injection (100) selon l'une quelconque des revendications 1 à 4, le système de moulage par injection (100) comprenant un cylindre chauffant (10) à alimenter avec une résine thermoplastique, une vis (12) prévue dans le cylindre chauffant (10) ; et un appareil de chauffage (16) fixé au cylindre chauffant (10),
le système de moulage par injection (100) comprenant en outre
une section de simulation d'état de plastification (52) configurée pour obtenir une condition de plastification en se basant sur une condition d'entrée entrée dans une section d'entrée (21) et simuler un état de plastification en utilisant la condition de plastification,
une section de décision (53) configurée pour décider si l'état de plastification obtenu par la section de simulation d'état de plastification (52) est un état idéal de plastification,
une section de changement de condition de plastification (56) configurée pour changer la condition de plastification lorsque la section de décision (52) décide que ce n'est pas l'état idéal de plastification, et
une section de sortie (57) configurée pour éditer la condition de plastification utilisée dans la section de simulation d'état de plastification (52) lorsque la section de décision (53) décide que c'est l'état idéal de plastification, et,
lorsque la condition de plastification est changée par la section de changement de condition de plastification (56), la section de simulation d'état de plastification (52) simule l'état de plastification en utilisant la condition de plastification après le changement.

6. Système de moulage par injection (100) selon la revendication 5, comprenant en outre :
une section de commande d'opération (54) configurée pour commander une section d'entraînement pour la vis (12) et l'appareil de chauffage (16) pour réaliser une opération de purge en utilisant la condition de plastification utilisée pour la simulation par la section de simulation d'état de plastification (52) ; et
une section de mesure (55) configurée pour mesurer au moins un paramètre parmi un temps de pesage et une viscosité de résine dans l'opération de purge,
la section de changement de condition de plastification (56) changeant la condition de plastification en utilisant un résultat de mesure par la section de mesure (55).

7. Système de moulage par injection (100) selon la revendication 5 ou 6, dans lequel la condition entrée inclut des informations spécifiant la résine, des informations spécifiant la vis (12), une quantité de résine par injection, et une durée de cycle de moulage.

8. Système de moulage par injection (100) selon la revendication 5 ou 6, dans lequel la condition de plastification inclut un nombre de rotations de vis, une contre-pression pendant la plastification et le pesage de la résine, et une température de cylindre chauffant.
